# EUROPÄISCHE PATENTSCHRIFT

(11) **EP 2 563 940 B1**
(45) Veröffentlichungstag und Bekanntmachung des Hinweises auf die Patenterteilung: **06.09.2017**
(21) Anmeldenummer: 11714532.6
(22) Anmeldetag: 12.04.2011
(51) Int. Cl.: C21B 5/06, C02F 1/00, C10K 1/00

(54) **VERFAHREN ZUR HERSTELLUNG VON ROHEISEN ODER FLÜSSIGEN STAHLVORPRODUKTEN**
METHOD FOR PRODUCING RAW IRON OR LIQUID STEEL PRECURSORS
PROCÉDÉ DE FABRICATION DE FONTE BRUTE OU DE PRODUITS D'ACIER SEMI-FINIS LIQUIDES

(30) Priorität: 26.04.2010 AT 6822010
(43) Veröffentlichungstag der Anmeldung: 06.03.2013
(73) Patentinhaber: Primetals Technologies Austria GmbH, 4031 Linz (AT)
(72) Erfinder: LUKSCHANDER, Kurt, A-4311 Schwertberg (AT); SCHMIDT, Ulrike, A-4060 Leonding (AT)
(74) Vertreter: Metals@Linz
(86) Internationale Anmeldenummer: PCT/EP2011/055668
(87) Internationale Veröffentlichungsnummer: WO 2011/134780

(56) Entgegenhaltungen:
- DE-A1- 2 315 768
- DE-A1- 4 032 288
- DE-A1- 19 620 310

## Beschreibung

Die Erfindung betrifft ein Verfahren zur Herstellung von Roheisen oder flüssigen Stahlvorprodukten, wobei eisenerzhältige Einsatzstoffe und gegebenenfalls Zuschlagsstoffe in zumindest einem Reduktionsaggregat mittels eines Reduktionsgases zumindest teilweise reduziert werden und zumindest Teile davon in einem Schmelzaggregat, insbesondere einem Einschmelzvergaser, unter Zufuhr von festen oder gasförmigen Kohlenstoffträgern, insbesondere Kohle, und sauerstoffhältigem Gas bei gleichzeitiger Bildung des Reduktionsgases eingeschmolzen werden, und das Reduktionsgas aus dem Schmelzaggregat und/ oder Topgas aus dem Reduktionsaggregat einer Reinigung unterzogen werden/ wird.

Aus der DE2315768A1 ist ein Verfahren bekannt, dass die Verunreinigungen des Wasserablauf eines Nasswäschers entfernt. Die im Wasserablauf enthaltenen suspendierten, absorbierten und gelösten Verunreinigungen werden dabei entfernt.

Aus der DE19620310A1 ist ein Verfahren zum Behandeln von Waschwasser aus Gaswäschern der Eisenerzreduktionsanlge bekannt. Durch die vorteilhafte Ausgestaltung des Verfahrens kommt es zu keinen Ablagerungen im gesamten Waschwasserkreislauf - mit Ausnahme des hierfür vorgesehen Eindickers. Die Ausschleusung von giftigem Kohlenmonoxid in die Athomspähre wird bei dem beschriebenen Verfahren ebenfalls stark reduziert.

Aus der DE4032288A1 ist ein Verfahren bekannt, dass das Waschwasser aus der Gaswäscher einer Eisenreduktionsanlage abgezogen wird und nach einer Feststoffabscheidung dem Gaschwäscher abgekühlt wieder zugeführt wird. Mit diesem Verfahren sollen ebenfalls die Ablagerung und Verkrustungen im Rohrleitungssystem und den Wäschern vermieden werden.

Bei der Herstellung von Roheisen kommt es im Schmelzaggregat aufgrund der Vergasung von Kohle und von weiteren Einsatzstoffen zur Bildung von komplexen, flüchtigen organischen Verbindungen (VOC). Diese Verbindungen können selbst bei hohen Prozesstemperaturen, wie sie z.B. im Dom eines Schmelzaggregates zur Herstellung von Roheisen vorliegen, nicht vollständig bzw. nicht in allen Betriebszuständen zerlegt werden.

Beim Betrieb eines Schmelzaggregates können Verbindungen, wie z.B. Benzene-Toluene-Xylene (BTX), Kohlenmonoxid, polyzyklische aromatische Kohlenwasserstoffe (PAH) aber auch Cyanide (CN⁻) entstehen, die hoch toxische Eigenschaften besitzen. Gemeinsam mit dem Reduktionsgas gelangen diese Verbindungen in die Gasreinigungseinrichtungen, wobei sich diese Verbindungen z.B. im Wasser einer Nassreinigung anreichern. Des Weiteren finden sich diese Verbindungen in allen Prozessgasen wie z.B. im Topgas, das aus dem Reduktionsaggregat abgezogen wird. Wenn die als Prozesswasser bezeichnete kontaminierte Flüssigkeit aus der Nassreinigung in einen Kühlturm eingeleitet wird, kann es zu einer erheblichen Umweltbelastung aufgrund der Verdunstung des Prozesswassers und der darin enthaltenen VOC im Kühlturm kommen.

Es ist daher eine Aufgabe der Erfindung derartige Umweltbelastungen bei der Herstellung von Roheisen oder flüssigen Stahlvorprodukten zu vermeiden.

Diese Aufgabe wird durch das erfindungsgemäße Verfahren nach Anspruch 1 gelöst.

Durch das erfindungsgemäße Verfahren werden im Prozesswasser gelöste VOC durch eine Entgasungsbehandlung des Prozesswassers entfernt. In der Folge kann das durch die Nassreinigung anfallende heiße und nun entgaste Prozesswasser problemlos in einem Kühlturm verdunstet und dabei gekühlt werden, ohne dass es dabei zu Umweltbelastungen durch toxische Verbindungen (VOC) kommt. Je nach Art und Staubbeladung bzw. Partikel, die sich im Reduktionsgas oder Topgas befinden, ist vor der Nassreinigung eine Trockenreinigung, wie z.B. einen Zyklon vorzusehen. Darüber hinaus wird die Anreicherung des Prozesswassers mit VOC vermieden, sodass auch keinerlei Belastungen für die Anlagen selbst bzw. die Umgebung der Anlage auftreten.

Gemäß einer vorteilhaften Ausgestaltung des erfindungsgemäßen Verfahrens erfolgt die Entgasung in einem oder mehreren, insbesondere parallel geschalteten, Entgasungseinrichtungen. Die Entgasungseinrichtungen können z.B. als Entgasungstöpfe realisiert sein, wobei das Prozessvolumen der einzelnen Entgasungsstufen entsprechend den Bedürfnissen gewählt werden kann. Eine mögliche Alternative kann durch eine serielle Anordnung der Entgasungseinrichtungen erzielt werden, wobei als erste Entgasungseinrichtung jene mit dem größten Prozessvolumen vor, die nachfolgende oder die nachfolgenden Stufen können entsprechend mit einem geringeren Prozessvolumen ausgeführt werden. Nach einer weiteren vorteilhaften Ausgestaltung des erfindungsgemäßen Verfahrens wird das Prozesswasser bei der Entgasung zusätzlich mit Spülgasen, insbesondere mit Luft, gespült. Durch die Spülung mit Luft wird eine bessere Entgasung erzielt, sodass kleinere Prozessvolumen oder auch eine geringere Anzahl an Entgasungseinrichtungen möglich werden.

Nach einer besonderen Ausgestaltung des erfindungsgemäßen Verfahrens werden die bei der Entgasung abgetrennten Gase verbrannt und die Abwärme, insbesondere zur Kohle- und/oder Erztrocknung, genutzt. Durch die Verbrennung werden einerseits die toxischen Verbindungen aufgebrochen und somit in nicht toxische Verbindungen umgewandelt und zusätzlich kann die dabei entstehende Abwärme für den Roheisenerzeugungsprozess bzw. für Prozessschritte zur Aufbereitung der Einsatzstoffe genutzt werden.

Eine spezielle Ausgestaltung des erfindungsgemäßen Verfahrens sieht vor, dass die bei der Entgasung abgetrennten Gase in einem Abluftfilter, insbesondere einem Aktivkohlefilter, abgeschieden werden. Bei Vorliegen besonders toxischer Verbindungen bzw. bei besonders hohen Auflagen betreffend die Emissionen, die durch das Verfahren freigesetzt werden, kann es erforderlich sein eine zusätzliche Maßnahme, nämlich die Filterung der abgetrennten Abgase vorzusehen. Zusätzlich ist es auch denkbar eine Verbrennung bzw. thermische Zerlegung der abgetrennten Gase in Kombination mit einem Abluftfilter einzusetzen, wobei auch höchste Umweltstandards eingehalten werden können.

Eine mögliche Ausgestaltung des erfindungsgemäßen Verfahrens sieht vor, dass der Trockenreinigung und/oder der Nassreinigung weitere Prozessgase zugeführt werden. Im Prozess zur Herstellung von Roheisen oder flüssigen Stahlvorprodukten kann es zu einer Kontamination von Prozessgasen durch VOC und in der Folge zu einer Kontamination von Prozesswasser kommen. Nassreinigungen werden grundsätzlich zur Reinigung von staub- oder auch partikelbelasteten Prozessgasen eingesetzt. Neben dem im Schmelzaggregat erzeugten Reduktionsgas, das auch als Generatorgas bezeichnet wird kann es auch im Reduktionsaggregat zu einer Kontamination des Reduktionsgases mit VOC kommen. Dieses Gas wird nach der Reduktionsarbeit als Topgas aus dem Reduktionsaggregat abgezogen und muss für eine weitere Nutzung gereinigt werden. Dabei kann es ebenfalls zu Anreicherungen von VOC im Prozesswasser kommen. Weitere kontaminierte Prozesswässer können bei der Behandlung von Kreislaufgasen, Kühlgasen usw. entstehen. Ebenso ist es denkbar in der Entgasung auch Prozesswässer aus der Roheisenerzeugung vor- oder nachgelagerten Prozessschritten einzubeziehen und entsprechend erfindungsgemäß zu behandeln.

Die Erfindung wird in weiterer Folge beispielhaft anhand eines nicht einschränkenden Ausführungsbeispieles bzw. der Figuren beschrieben.

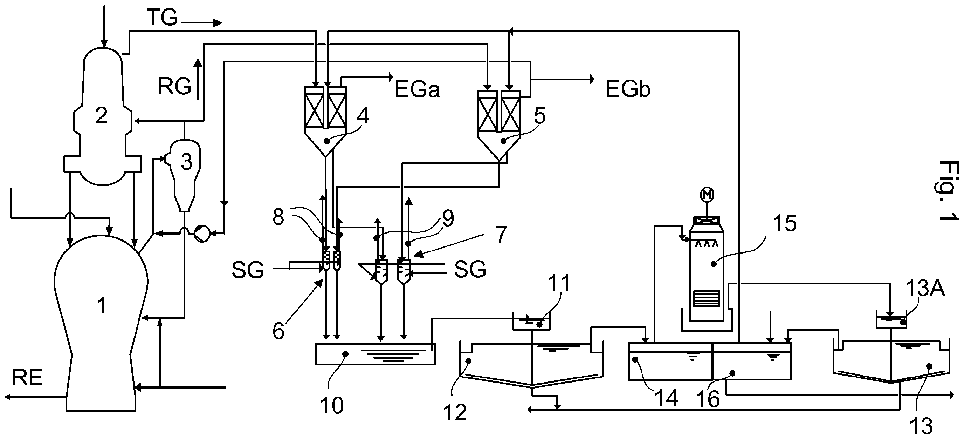

- Fig. 1:: Prozessschema zu einem Direktreduktions-Schmelzverfahren

Figur 1 zeigt das Prozessschema einer möglichen Ausgestaltung des erfindungsgemäßen Verfahrens. In einer Anlage zur Erzeugung von Roheisen fallen Prozessgase, wie überschüssiges Reduktionsgas RG oder auch Topgas TG, die gereinigt werden müssen. Reduktionsgas wird in einem Einschmelzvergaser 1 unter Zufuhr von festen oder gasförmigen Kohlenstoffträgern, wie z.B. Kohle oder Koks, und sauerstoffhältigem Gas gebildet. Eisenerzhältige Einsatzstoffe und gegebenenfalls Zuschlagsstoffe, die, vorab zumindest teilweise in einem Reduktionsaggregat 2 reduziert wurden, werden in den Einschmelzvergaser 1 eingebracht und zu Roheisen RE erschmolzen.

Das im Einschmelzvergaser 1 gebildete Reduktionsgas RG und gegebenenfalls weitere Prozessgase, wie z.B. am Reduktionsaggregat 2 abgezogenes Topgas TG oder auch hier nicht dargestellte Kreislaufgase, werden zur weiteren Verwendung einer Reinigung unterzogen, wobei z.B. Feststoffe, Partikel, aber auch Stäube abgetrennt werden. Diese Reinigung kann in ein oder zwei Stufen ablaufen, wobei z.B. eine erste Reinigungsstufe 3, wie z.B. ein Zyklon, gefolgt von einer Nassreinigung zur Anwendung kommen kann. Es ist aber auch möglich nur eine Reinigungsstufe in Form einer Nassreinigung vorzusehen. Als Nassreiniger kommt zumindest ein Gaswäscher 4, 5 zum Einsatz, wobei die Verunreinigungen mit dem Prozesswasser ausgespült werden, wobei die Schadstoffe, wie z.B. flüchtige organische Verbindungen (VOC), in das Prozesswasser gelangen. Vorteilhaft kann ein Gaswäscher 4 für Topgas TG und ein weiterer Gaswäscher 5 für Reduktionsgas RG zum Einsatz kommen.

Prozesswasser wird aus dem Gaswäscher 4, 5 abgeleitet und Entgasungseinrichtungen 6, 7 zugeführt. Je Gaswäscher sind eine unten angesetzte Ableitung, die sogenannte Konusableitung, und eine weiter oben angesetzte Ableitung, die sogenannte Wehrableitung, vorgesehen. In der Konusableitung fallen vor allem gröbere Verunreinigungen und in der Wehrableitung feinere Verunreinigungen an. Aufgrund der größeren Mengen an Prozesswasser, die an den Wehrableitungen anfallen, sind die Entgasungseinrichtungen 7 für ein größeres Prozessgasvolumen vorgesehen. Die Konusableitungen werden zu den kleiner ausgeführten Entgasungseinrichtungen 6 geführt.

Das gereinigte Topgas TG kann als Exportgas EGa aus dem Wäscher 4 abgeführt werden, analog dazu wird das gereinigte Reduktionsgas RG ebenfalls als Exportgas EGb aus dem Wäscher 5 abgeführt.

In den Entgasungseinrichtungen 6, 7 werden unter Druckverminderung und unter Zusatz eines Spülgases SG, wie z.B. Luft, die Schadstoffe aus dem Prozesswasser ausgespült und mittels Schadstoffleitungen 8, 9 als Abluftstrom abgeführt.

Das gereinigte Prozesswasser wird zunächst in ein Sammelbecken 10 eingebracht und zur Strömungsberuhigung in einen Einlaufbereich 11 und von diesem in ein erstes Absetzbecken 12 eingebracht und gereinigt, wobei Schlamm abgeschieden wird. Danach wird das Prozesswasser zunächst in ein Heißwasserbecken 14 eingeleitet, in einem Kühlturm 15 gekühlt, optional einem weiteren Einlaufbereich 13A und einem weiteren Absetzbecken 13 zugeführt und dann im Kaltwasserbecken 16 gesammelt. Aus dem Kaltwasserbecken kann das Kreislauf-Prozesswasser wiederum dem oder den Gaswäschern 4, 5 zugeführt werden.

Die Absetzbecken 12, 13 können parallel vor dem Kühlturm 15 oder auch seriell vor und auch dem Kühlturm 15 angeordnet werden.

Über die Schadstoffleitungen 8, 9 kann der Abluftstrom mit den aus dem Prozesswasser abgetrennten Schadstoffen (VOC, Luft, weitere Spülgase) einer Einrichtung zur weiteren Behandlung dieser gasförmigen Schadstoffe zugeführt werden. Dazu ist es auch möglich diese Gase direkt, gegebenenfalls unter Zusatz von Luft oder sauerstoffhältigen Gasen, zur Energieerzeugung zu verbrennen, wobei auch toxische Schadstoffe abgebaut werden können. Weiters ist es auch denkbar den Abluftstrom mit weiteren brennbaren Gasen, insbesondere mit brennbaren Prozessgasen zu mischen und zu verbrennen. Das brennbare Gas kann aber auch gespeichert und als Energiequelle herangezogen werden. Insbesondere wird die bei der Verbrennung anfallende Abwärme im Verfahren zur Herstellung von Roheisen oder flüssigen Stahlvorprodukten genutzt. Eine mögliche Nutzung der Abwärme kann zur Kohle- und/oder Erztrocknung herangezogen werden.

### Bezugszeichenliste

- 1: Schmelzaggregat
- 2: Reduktionsaggregat
- 3: erste Reinigungsstufe
- 4,5: Gaswäscher
- 6,7: Entgasungseinrichtung
- 8, 9: Schadstoffleitungen
- 10: Sammelbecken
- 11: Einleitbecken
- 12: Absetzbecken
- 13A: weiteres Einleitbecken
- 13: weiteres Absetzbecken
- 14: Heißwasserbecken
- 15: Kühlturm
- 16: Kaltwasserbecken

## Patentansprüche

1. Verfahren zur Herstellung von Roheisen oder flüssigen Stahlvorprodukten, wobei eisenerzhältige Einsatzstoffe und gegebenenfalls Zuschlagsstoffe in zumindest einem Reduktionsaggregat (2) mittels eines Reduktionsgases zumindest teilweise reduziert werden und zumindest Teile davon in einem Schmelzaggregat (1), insbesondere einem Einschmelzvergaser, unter Zufuhr von festen oder gasförmigen Kohlenstoffträgern, insbesondere Kohle, und sauerstoffhältigem Gas bei gleichzeitiger Bildung des Reduktionsgases (RG) eingeschmolzen werden, und das Reduktionsgas (RG) aus dem Schmelzaggregat (1) und/oder Topgas (TG) aus dem Reduktionsaggregat (2) einer Reinigung unterzogen werden/wird, **dadurch gekennzeichnet, dass** die Reinigung eine Trockenreinigung (3) und eine Nassreinigung (4, 5) umfasst, wobei das bei der Nassreinigung anfallende Prozesswasser einer Entgasung unterzogen wird und im Prozesswasser gebundene Gase, insbesondere flüchtige organische Verbindungen (VOC), vom Prozesswasser abgetrennt werden, wobei diese Gase, unter Zusatz von Luft oder sauerstoffhältigen Gasen, zum Abbau toxischer Schadstoffe verbrannt werden.

2. Verfahren nach Anspruch 1, **dadurch gekennzeichnet, dass** die Entgasung in einem oder mehreren, insbesondere parallel geschalteten, Entgasungseinrichtungen (6, 7) erfolgt.

3. Verfahren nach einem der Ansprüche 1 oder 2, **dadurch gekennzeichnet, dass** das Prozesswasser bei der Entgasung zusätzlich mit Spülgasen (SG), insbesondere mit Luft, gespült wird.

4. Verfahren nach einem der Ansprüche 1 bis 3, **dadurch gekennzeichnet, dass** die bei der Entgasung abgetrennten Gase verbrannt und die Abwärme, insbesondere zur Kohle- und/oder Erztrocknung, genutzt werden.

5. Verfahren nach einem der Ansprüche 1 bis 3, **dadurch gekennzeichnet, dass** die bei der Entgasung abgetrennten Gase in einem Abluftfilter, insbesondere einem Aktivkohlefilter, abgeschieden werden.

6. Verfahren nach einem der Ansprüche 1 bis 5, **dadurch gekennzeichnet, dass** der Trockenreinigung und/oder der Nassreinigung weitere Prozessgase zugeführt werden.

## Claims

1. Process for producing pig iron or liquid primary steel products, wherein charge materials containing iron ore and, if appropriate, additions are at least partially reduced in at least one reduction unit (2) by means of a reducing gas, and at least parts thereof are smelted in a smelting unit (1), in particular a melter gasifier, with solid or gaseous carbon carriers, in particular coal, and oxygen-containing gas being fed in, with simultaneous formation of the reducing gas (RG), and the reducing gas (RG) from the smelting unit (1) and/or top gas (TG) from the reduction unit (2) are/is subjected to cleaning, **characterized in that** the cleaning comprises dry cleaning (3) and wet cleaning (4, 5), wherein the process water obtained during the wet cleaning is subjected to degassing and gases bound in the process water, in particular volatile organic compounds (VOC), are removed from the process water, wherein these gases are combusted, with the addition of air or oxygen-containing gases, to decompose toxic pollutants.

2. Process according to Claim 1, **characterized in that** the degassing is effected in one or more degassing devices (6, 7), in particular connected in parallel.

3. Process according to either of Claims 1 and 2, **characterized in that** the process water is additionally purged with purge gases (SG), in particular with air, during the degassing.

4. Process according to one of Claims 1 to 3, **characterized in that** the gases removed during the degassing are combusted and the waste heat is utilized, in particular for coal and/or ore drying.

5. Process according to one of Claims 1 to 3, **characterized in that** the gases removed during the degassing are separated in a waste-air filter, in particular an activated carbon filter.

6. Process according to one of Claims 1 to 5, **characterized in that** further process gases are fed for the dry cleaning and/or the wet cleaning.

## Revendications

1. Procédé de production de fonte brute ou de produits semi-finis en acier liquide, des matières de charge contenant du minerai de fer et, le cas échéant, des agrégats étant réduits au moins partiellement dans au moins une unité de réduction (2) au moyen d'un gaz de réduction et au moins des parties de ces matières et agrégats étant fondues dans une unité de fusion (1), notamment un gazéificateur de fusion, avec apport de porteurs de carbone solides ou gazeux, notamment de charbon, et d'un gaz contenant de l'oxygène, avec formation simultanée du gaz de réduction (RG), et le gaz de réduction (RG) provenant de l'unité de fusion (1) et/ou le gaz de haut-fourneau (TG) provenant de l'unité de réduction (2) étant soumis à un nettoyage, **caractérisé en ce que** le nettoyage comprend un nettoyage par voie sèche (3) et un nettoyage par voie humide (4, 5), l'eau de processus résultant du nettoyage par voie humide étant soumise à un dégazage et les gaz liés présents dans l'eau de processus, notamment des composés organiques volatils (COV), étant séparés de l'eau de processus, ces gaz étant brûlés, avec apport d'air ou de gaz contenant de l'oxygène, pour dégrader les substances nocives toxiques.

2. Procédé selon la revendication 1, **caractérisé en ce que** le dégazage est réalisé dans un ou plusieurs dispositifs de dégazage (6, 7), notamment montés en parallèle.

3. Procédé selon l'une des revendications 1 ou 2, **caractérisé en ce que** l'eau de processus est nettoyée en plus avec des gaz de lavage (SG), notamment avec de l'air, lors du dégazage.

4. Procédé selon l'une des revendications 1 à 3, **caractérisé en ce que** les gaz séparés lors du dégazage sont brûlés et la chaleur dégagée est utilisée, notamment pour le séchage du charbon et/ou du minerai.

5. Procédé selon l'une des revendications 1 à 3, **caractérisé en ce que** les gaz séparés lors du dégazage sont déposés dans un filtre d'évacuation d'air, notamment un filtre à charbon actif.

6. Procédé selon l'une des revendications 1 à 5, **caractérisé en ce que** des gaz de processus supplémentaires sont amenés au nettoyage par voie sèche et/ou au nettoyage par voie humide.
